# FASCICULE DE BREVET EUROPEEN

(11) **EP 1 941 167 B1**
(45) Date de publication et mention de la délivrance du brevet: **27.07.2011**
(21) Numéro de dépôt: 06794506.3
(22) Date de dépôt: 28.07.2006
(51) Int. Cl.: F16B 19/10

(54) **RIVET AVEUGLE ET SON PROCEDE D'ENLEVEMENT**
BLINDNIET UND VERFAHREN ZU DESSEN ENTFERNUNG
BLIND RIVET AND REMOVAL METHOD THEREOF

(30) Priorité: 26.08.2005 FR 0552574
(43) Date de publication de la demande: 09.07.2008
(73) Titulaire: ATELIERS DE LA HAUTE GARONNE ETS AURIOL ET CIE, 31131 Balma Cedex (FR); Ateliers de la Haute-Garonne Rivets, 31130 Flourens (FR); ERIS, 31130 Flourens (FR)
(72) Inventeur: AURIOL, Pierre, F-31130 Flourens (FR); AURIOL, Jean-Marc, F-31130 Flourens (FR)
(74) Mandataire: Richebourg, Michel François
(86) Numéro de dépôt international: PCT/FR2006/050761
(87) Numéro de publication internationale: WO 2007/023236

(56) Documents cités:
- EP-A- 0 677 666
- DE-B- 1 300 358
- US-B1- 6 487 767

## Description

### DOMAINE D'APPLICATION DE L'INVENTION

La présente invention a trait au domaine des fixations de type rivets aveugles et notamment aux adaptations permettant de réaliser dans les meilleures conditions les différentes opérations constituant l'épinglage de deux tôles entre elles.

En particulier, la présente invention concerne un procédé d'enlèvement selon le préambule de la revendication 1.

Un tel procédé est connu du document EP 0 677 666 A1.

### DESCRIPTION DE L'ART ANTÉRIEUR

L'opération de fixation temporaire dite opération d'épinglage est une phase d'assemblage qui présente une pluralité de fonctions :
- le positionnement des éléments à assembler,
- le fluage du mastic d'étanchéité si un mastic est utilisé,
- l'accostage des tôles,
- leur maintien en position.

Les demandeurs ont constaté qu'une fois l'accostage et l'opération de serrage réalisées, les rivets aveugles de l'art antérieur ont dans le cadre d'une application d'épinglage, pour inconvénient majeur de ne proposer que peu de tension installée dans le serrage qu'ils réalisent ce qui peut se révéler être particulièrement désavantageux pour l'opération de fixation permanente qui suit classiquement l'opération de fixation temporaire.

Un autre inconvénient lié également à la transition entre l'opération de fixation temporaire et l'opération de fixation permanente, concerne l'enlèvement ou dépose du moyen de fixation temporaire. En effet, l'opération d'enlèvement doit pouvoir être réalisée dans les meilleures conditions de durée et de simplicité possibles. Or, les demandeurs ont constaté que de telles opérations nécessitent des outils spécifiques notamment pour l'usinage du rivet installé à des fins de destruction, un tel usinage étant susceptible d'endommager les éléments à assembler.

Un autre inconvénient des moyens de fixation de l'art antérieur utilisés pour l'épinglage est le manque d'adaptabilité quant à l'épaisseur des éléments qu'ils doivent assembler. En effet, les capacités des moyens de fixation de l'art antérieur ne permettent pas avec un seul modèle dimensionnel d'assurer l'épinglage de l'ensemble des épaisseurs possibles des assemblages à réaliser, ce qui nécessite la présence de plusieurs modèles dimensionnels de rivets.

Ledit document EP 0 677 666 A1 décrit un rivet aveugle du type de celui prévu pour l'accostage et l'épinglage d'au moins deux éléments entre eux et mis en place par un outil de pose,
le rivet étant un ensemble constitué d'une douille creuse déformable et d'un mandrin sécable se positionnant à l'intérieur de ladite douille,
l'ensemble venant se positionner et traverser deux orifices rendus sensiblement coaxiaux et ménagés dans les éléments à assembler,
la douille comportant un corps à deux extrémités,
une première extrémité comportant une tête préformée pour définir une première surface d'appui sur la surface extérieure d'un premier élément, et une deuxième extrémité qui, sous l'action d'une déformation par traction sur le mandrin vient former un bulbe définissant une deuxième surface d'appui sur la surface extérieure dudit deuxième élément,
la prolongation de l'effort ayant pour effet le rapprochement des deux surfaces d'appuis et en conséquence le rapprochement des deux éléments à assembler.

Dans le mode de réalisation illustré, la douille est composée d'une seule et même pièce, et est préformée d'une seule partie amincie se situant entre les deux surfaces d'appui. Néanmoins, le mouvement de traction participant à l'installation du rivet décrit dans ce document n'a pas pour autre conséquence de sertir la première extrémité de la douille sur la deuxième extrémité du mandrin. Ainsi, il n'est pas possible de créer un réel effort de serrage ni de mettre en place une tension installée grâce à ce rivet décrit dans ce document puisque le mandrin n'est pas fixé à la douille une fois la déformation de cette dernière finalisée.

### DESCRIPTION DE L'INVENTION

Ce que constatant les demandeurs ont mené des recherches visant à proposer un procédé d'enlèvement d'un rivet aveugle susceptible d'être utilisé dans le cadre d'un procédé d'épinglage et améliorant la tension de serrage qu'il crée entre les deux tôles dont il assure la fixation.

Ces recherches ont été menées avec pour objectifs la conception et la fabrication d'un rivet adapté aux différentes épaisseurs que peuvent prendre les assemblages d'éléments accostés et épinglés.

De plus, l'opération d'enlèvement a été prise en compte dans la conception de ce rivet.

Ce procédé d'enlèvement d'un rivet aveugle du type de celui prévu pour l'épinglage d'au moins deux éléments entre eux et mis en place par un outil de pose,
- le rivet étant constitué d'une douille creuse déformable et d'un mandrin sécable se positionnant à l'intérieur de ladite douille,
- l'ensemble venant se positionner et traverser deux orifices rendus sensiblement coaxiaux et ménagés dans les éléments à assembler,
- la douille comprenant deux extrémités, une première extrémité comportant une tête préformée pour définir une première surface d'appui sur la surface extérieure d'un premier élément, et une deuxième extrémité qui, sous l'action d'une déformation par traction sur le mandrin vient former un bulbe définissant une deuxième surface d'appui sur la surface extérieure dudit deuxième élément,
- ledit mandrin comprenant deux extrémités, une première extrémité comprenant une tête qui, une fois le mandrin positionné à l'intérieur de la douille, vient en appui avec la deuxième extrémité de cette dernière de sorte que sous l'action d'un effort de traction sur le mandrin, la tête déforme la deuxième extrémité de la douille, et une deuxième extrémité à laquelle vient s'associer un moyen de traction imprimant un effort de traction au mandrin tout en maintenant la première extrémité de la douille en contact avec un des éléments,
- la prolongation de l'effort ayant pour effet le rapprochement des deux surfaces d'appui et en conséquence le rapprochement des deux éléments à assembler et le sertissage de la première extrémité de la douille sur la deuxième extrémité du mandrin.

Le rivet comporte une douille qui, composée d'une seule et même pièce, est préformée d'une seule partie amincie se situant entre les deux surfaces d'appui, cette partie amincie ayant pour fonction de ne pas contrecarrer les efforts de traction, de faciliter la déformation de la douille et d'autoriser la mise en place d'une tension installée.

Le procédé d'enlèvement du rivet de l'invention est remarquable en ce qu'il consiste à reprendre l'effort de traction qui va assurer une rupture de la douille au niveau de son bulbe pour permettre l'évacuation, par les orifices de fixation, du mandrin et d'une première partie de la douille et la chute de la partie de bulbe restée en extérieur.

Cette caractéristique a pour avantage de permettre sa mise en oeuvre par l'outil de pose lui-même. Elle permet également d'envisager un procédé de désinstallation de rivet, autre objet de l'invention, où le rivet est désinstallé par traction sur la mandrin à des fins de rupture du bulbe entre la tête du mandrin et le rebord de l'orifice ménagé sur la surface d'appui du bulbe. Ainsi, l'enlèvement ou dépose du rivet d'épinglage ne nécessite pas d'outillage particulier et n'est pas susceptible d'endommager les éléments à assembler.

La fonction et les effets techniques de la partie amincie de l'invention sont spécifiques. Cette partie amincie est prévue pour faciliter la déformation de la douille et autoriser ainsi la mise en place d'une tension installée ou effort de serrage maintenu. Ainsi, l'effort de serrage n'est pas perdu dans la déformation de la partie amincie qui se déforme sous l'action d'un effort moindre. La tension installée est donc créée entre la partie de douille sertie dans les cannelures du mandrin et en appui sur un premier élément et le bulbe créé par la deuxième extrémité de la douille déformée par la tête de mandrin et en appui sur la deuxième tôle. Cette nouvelle douille permet en conséquence un gain d'effort dans l'installation du rivet. La partie amincie constitue donc une zone de compression axiale facilitant l'écrasement axial d'une partie bien précise de la douille, afin d'augmenter le serrage de la fixation. L'extension radiale ou gonflement si il a lieu n'a pas dans le rivet de l'invention de fonction recherchée.

Cette caractéristique est nouvelle en ce que les constructeurs de rivets n'ont pas jusqu'ici cherché à mettre en place une tension dans l'assemblage pour une fixation temporaire tel l'épinglage.

Cette partie amincie n'a pas pour finalité de créer une zone de rupture ce qui obligerait à gérer deux pièces pour la douille mais d'éviter que l'épaisseur de la douille ne s'oppose à l'effort de serrage tout en gardant la douille en une seule et même pièce.

La zone amincie prévue dans la douille décrite dans Ledit document EP 0 677 666 A1 a pour fonction d'être déformée pour créer un bulbe ou pour faciliter sa création alors que la zone amincie de l'invention a pour fonction de devenir une zone de compression axiale facilitant l'écrasement axial d'une partie bien précise de la douille afin d'augmenter le serrage de la fixation. Ce besoin n'existe pas dans EP 0 677 666 du fait de l'absence de sertissage.

Selon une autre caractéristique particulièrement avantageuse de l'invention, la longueur de la partie amincie est inférieure à la plus petite distance séparant les surfaces extérieures des éléments à fixer/accoster, ce qui garantit que la partie amincie se trouve toujours comprise entre les deux surfaces extérieures servant de surfaces d'appui au rivet. En définissant une longueur limitée pour la zone amincie de la douille, les effets de cette dernière sont facilités quelle que soit l'épaisseur de l'assemblage formé par les deux éléments.

De plus, ces effets sont garantis en aménageant la partie amincie au plus prés de la première surface d'appui définie par la douille. Cette disposition assure une grande liberté quant à la longueur de la douille susceptible d'être déformée ce qui augmente les possibilités d'épaisseur à assembler.

Selon une autre caractéristique particulièrement avantageuse de l'invention, la partie amincie est séparée de la surface d'appui définie par la première extrémité de la douille d'une portion présentant une épaisseur plus importante.

Les concepts fondamentaux de l'invention venant d'être exposés ci-dessus dans leur forme la plus élémentaire, d'autres détails et caractéristiques ressortiront plus clairement à la lecture de la description qui suit et en regard des dessins annexés, donnant à titre d'exemple non limitatif, un mode de réalisation d'un rivet et d'un procédé d'enlèvement conformes à l'invention.

### BRÈVE DESCRIPTION DES DESSINS

La figure 1 est un dessin schématique d'une vue en coupe d'un mode de réalisation d'un rivet conforme à l'invention,
Les figures 2a, 2b et 2c sont des dessins schématiques en coupe illustrant la déformation de la douille du rivet illustré en figure 1,
La figure 3 est un dessin schématique d'une vue en coupe illustrant la rupture de la douille lors de l'enlèvement du rivet,
La figure 4 est un dessin schématique d'un autre mode de réalisation du rivet de l'invention.

### DESCRIPTION DES MODES DE RÉALISATION PRÉFÉRÉS

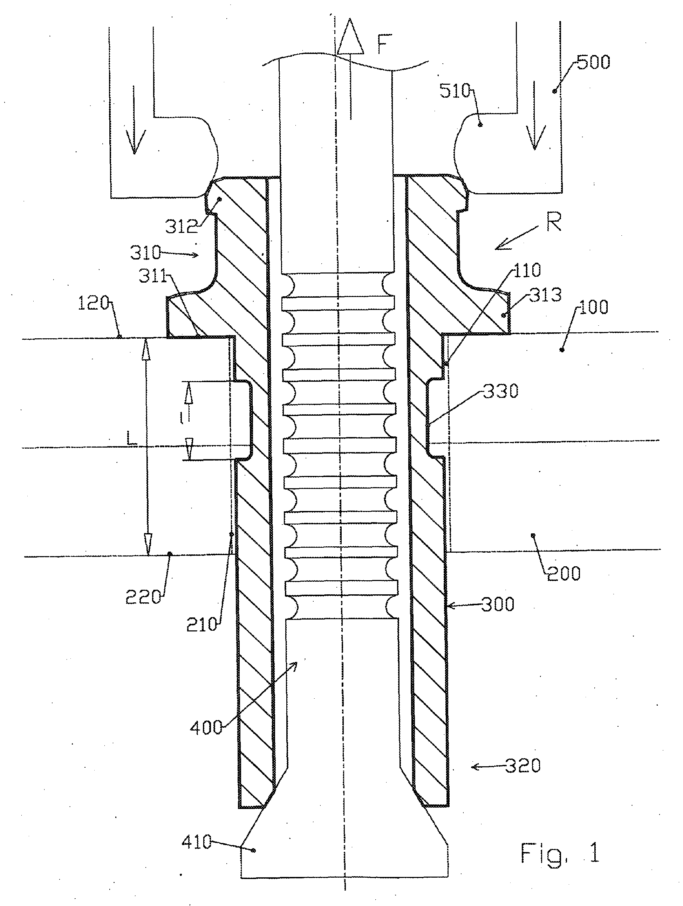

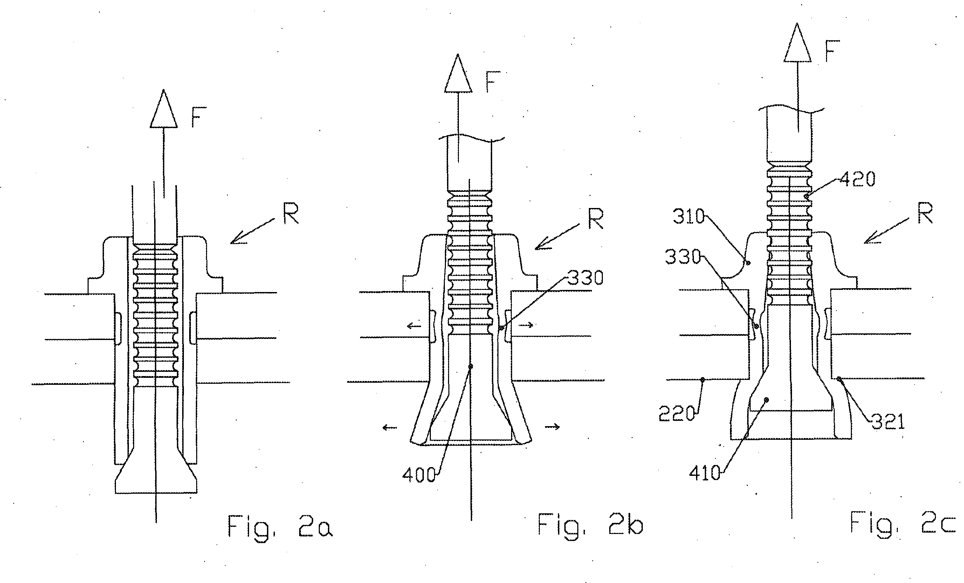

Tel qu'illustré sur le dessin de la figure 1, le rivet aveugle référencé R dans son ensemble est du type de celui prévu pour l'accostage et l'épinglage d'au moins deux éléments 100 et 200 entre eux. Ce rivet R est un ensemble constitué d'une douille déformable 300 et d'un mandrin sécable 400. Comme illustré, cet ensemble vient se positionner et traverser deux orifices 110 et 210 rendus sensiblement coaxiaux et ménagés dans les éléments 100 et 200 à assembler. La douille 300 comporte deux extrémités 310 et 320 :
- Une première extrémité 310 comportant une tête protubérante préformée pour définir une première surface d'appui 311 sur la surface extérieure 120 d'un premier élément 100, et
- Une deuxième extrémité 320 qui, sous l'action d'une déformation par traction symbolisée par le flèche F sur le mandrin 400 vient définir une deuxième surface d'appui 321 (illustrée en figure 2c) ou bulbe sur la surface extérieure 220 dudit deuxième élément 200.

Comme classiquement dans le cadre d'un rivet d'épinglage, la prolongation de l'effort sur le mandrin 400 a pour effet le rapprochement des deux surfaces d'appui 311 et 321 et en conséquence le rapprochement des deux éléments 100 et 200 à assembler.

Conformément à l'invention, le rivet R comporte une douille 300 qui, composée d'une seule et même pièce, est préformée d'une seule partie amincie 330 se situant entre les deux surfaces d'appui et dont la longueur 1 est inférieure à la plus petite distance L séparant les surfaces extérieures 120 et 220 des éléments 100 et 200 à fixer/accoster.

Comme illustrée, cette partie amincie 330 est constituée par un changement de section sur une longueur 1 de la partie cylindrique de la douille 300. Conformément à l'invention et comme illustrée, la partie amincie 330 est constituée par une portion de douille 300 présentant un diamètre extérieur inférieur au diamètre extérieur du reste de la douille 300.

Cet amincissement peut toutefois prendre d'autres formes. Ainsi selon un exemple non illustré, la partie amincie 330 est constituée par une portion de douille 300 présentant un diamètre intérieur supérieur au diamètre intérieur du reste de la douille, la perte de matière étant alors réalisée à partir de la surface intérieure.

L'amincissement quel qu'il soit a pour fonction d'autoriser la compression du corps de la douille 300 compris entre les deux surfaces d'appui 311 et 321 qu'elle forme lors de l'installation du rivet R, pour éviter que le corps de douille 300 ne supporte la plus grande partie de l'effort de traction d'une part et que le serrage mis en place en soit amoindri d'autre part. Cette zone de compression axiale ne peut donc être située qu'entre les deux surfaces d'appui utilisées pour la fixation.

Selon une autre caractéristique particulièrement avantageuse de l'invention, la douille 300 est en alliage d'aluminium de la série 2000 ou 7000 présentant une résistance de 60 à 83 Ksi (env. 413 MPa à 571 MPa).

Les demandeurs ont établi que l'épaisseur de la partie amincie de la douille correspond à environ 0,5 fois l'épaisseur de la douille.

Les caractéristiques dimensionnelles d'un mode de réalisation de la douille sont les suivantes :
- épaisseur de douille 0,7 millimètre
- épaisseur de la partie amincie 0,37 millimètre.

Selon une autre caractéristique particulièrement avantageuse de l'invention, le mandrin 400 est en alliage austénitique à haute résistance obtenue par écrouissage présentant une résistance à la traction de 1500 à 2000 Mpa. Selon une autre caractéristique particulièrement avantageuse de l'invention, le mandrin 400 est en alliage austénitique à haute résistance obtenue par écrouissage présentant une résistance à la traction de 1200 à 2000 Mpa.

L'association des deux matériaux utilisés respectivement pour la douille et pour le mandrin participe à la mise en place d'une tension installée. Afin de limiter le retour élastique de l'acier inoxydable austénitique, un traitement thermique de stabilisation (vieillissement structural) peut être réalisé sur le mandrin.

De plus, les modes de réalisation envisagés apportent une qualité de finition telle qu'elle permet une gestion séparée jusqu'à l'assemblage des mandrins et des douilles sans opération de pré-assemblage préalable de ces deux éléments.

Les figures 2a, 2b, 2c montrent, en vue en coupe, la déformation progressive de la douille 300 lors de l'installation du rivet.

Dans ces figures, il apparaît clairement que sous l'action d'un effort de traction symbolisé par la flèche F (cf figure 2a). La douille 300 se déforme au niveau de sa deuxième extrémité 320, sous l'action de la tête de mandrin 410, pour former un bulbe qui va venir en appui sur le deuxième élément 200 (cf. figure 2b). La continuation de l'effort de traction a pour conséquence la déformation vers l'extérieur de la douille 300, de la portion amincie 330 (cf. figure 2c). Ledit mandrin est avantageusement préformé d'une pluralité de cannelures 420 auxquelles vient s'associer l'outil de pose ou de dépose.

Il est possible de décomposer la séquence de pose au moyen des efforts produits :
- F1 effort de traction nécessaire pour poser la fixation (effort correspondant à la rupture de la gorge du mandrin),
- F2 : effort de filage du bulbe ou de création de la zone déformée, cet effort permet la déformation de la douille côté aveugle,
- F3 : effort nécessaire pour déformer la zone de compression axiale,
- F4 : effort du début du sertissage de la douille, ce sertissage correspond au verrouillage de la douille du côté de l'outil de pose.

La chronologie des opérations de pose est la suivante
1. Traction sur le mandrin,
2. Filage de la douille côté aveugle (déformation pour créer une surface d'appui)
3. Pliage de la zone de compression axiale
4. Sertissage de la douille
5. Rupture du mandrin.

La liaison entre les différents efforts est décrite par l'inégalité suivante :
F2<F3<F4<F1

Comme illustrée sur le dessin de la figure 1, la forme de la tête constituant la première extrémité 310 du rivet R a fait l'objet d'une étude afin d'optimiser les opérations de déformation et éviter le contact de l'outil de pose avec la surface extérieure 120 du premier élément 100.

Ainsi, la tête 310 de la douille 300 présente la forme générale d'un cylindre creux traversé par le mandrin 400 présentant un premier renflement radial 312 au niveau de son extrémité supérieure à des fins de meilleure coopération avec l'outil de pose 500 ainsi qu'un autre renflement radial formant une collerette 313 au niveau de la surfacé 311 définissant l'appui avec l'élément à assembler à des fins d'une part de création d'une plus grande surface d'appui 311 pour la tête sur l'élément 100 et d'autre part de création d'un obstacle évitant tout contact entre l'outil de pose 500 et la surface dudit élément à assembler 100.

La forme de l'extrémité 500 de l'outil de pose a été modifiée pour mieux coopérer avec cette tête de rivet. Ainsi, comme illustrée, la tête de l'outil de pose 500 adopte une ouverture 510 adoptant la forme intérieure d'un tore.

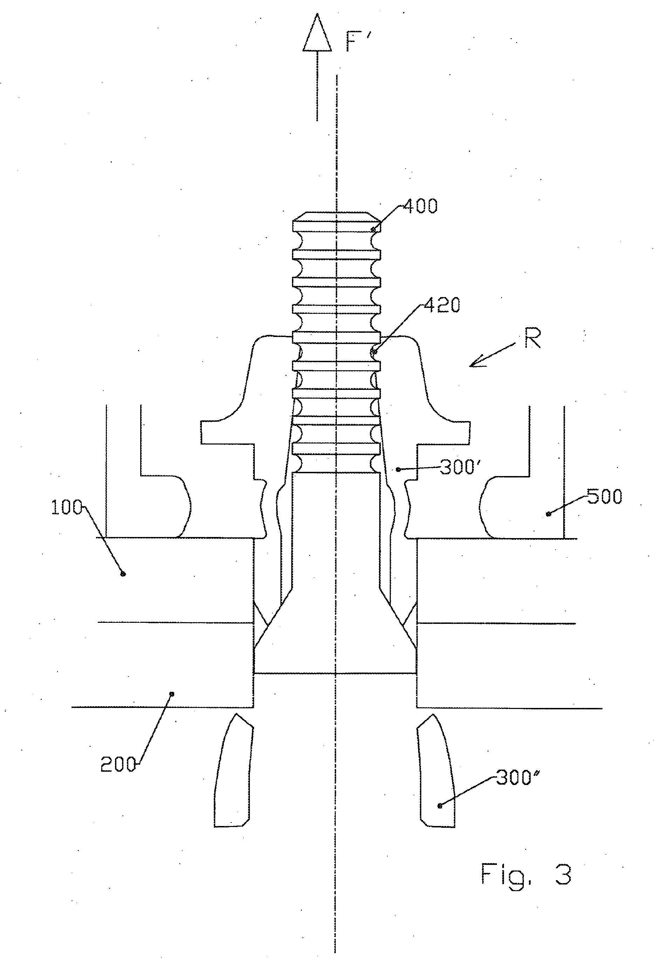

Un autre objet de l'invention est constitué par le procédé d'enlèvement du rivet R illustré par la figure 3. Ce procédé rendu possible par la géométrie et le type de matériau utilisé pour les éléments constitutifs du rivet R, est remarquable en ce qu'il consiste à reprendre l'effort de traction F' qui va assurer une rupture de la douille 300 au niveau de son bulbe pour permettre l'évacuation, par les orifices de fixation 110 et 210, du mandrin 400 et d'une première partie de la douille 300' et la chute de la partie de bulbe restée en extérieur 300". Pour ce faire, une caractéristique particulièrement avantageuse de ce rivet est que ledit mandrin 400 est préformé d'une gorge de rupture dimensionnée pour se casser et située suffisamment loin de la tête de douille 310 pour autoriser la reprise du mandrin 400 à des fins de dépose du rivet.

Comme illustrée, bien que l'outil de pose soit équivalent, son extrémité est élargie pour venir en appui sur l'élément à assembler et ne pas gêner l'extraction du rivet R.

Ainsi, par exemple, le mode de réalisation préféré décrit plus haut comprend un mandrin dans un matériau très résistant qui ne peut être contre percé. De plus, afin de pouvoir le déposer (cad le retirer) en tirant, il est nécessaire que la tige du mandrin dépasse après la pose pour pouvoir se ré-agripper dessus lors de la dépose. La longueur de dépassement du mandrin varie donc en fonction de l'épaisseur à serrer.

Dans certaines applications, en particulier pour la robotique, il faut que le dépassement de la fixation du côté de la pose soit de hauteur constante quelle que soit l'épaisseur à serrer. En outre, la fixation créée par ce rivet doit être contre-perçable.

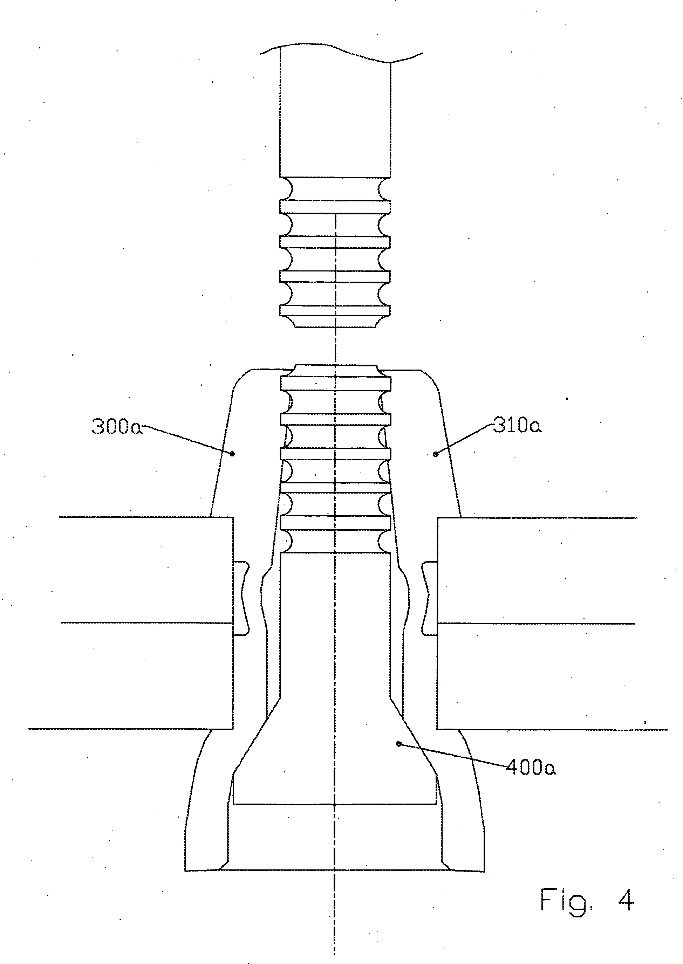

Pour répondre à ce besoin un mode de réalisation du rivet conforme à l'invention est proposé tout en aluminium et comme illustré sur le dessin de la figure 4, le rivet Ra conserve les caractéristiques structurelles établies pour le rivet de l'invention pour ce qui est de l'extrémité déformée de douille et de la zone de compression axiale mais de modifier la forme de la douille au niveau du sertissage afin que le mandrin 400 se casse en fin de pose au raz de la tête 310a de la douille 300a quelle que soit l'épaisseur à serrer de par l'accumulation des contraintes sur cette zone.

## Revendications

1. Procédé d'enlèvement d'un rivet aveugle (R) du type de celui prévu pour l'accostage et l'épinglage d'au moins deux éléments (100 et 200) entre eux et mis en place par un outil de pose,
le rivet (R) étant un ensemble constitué d'une douille creuse déformable (300) et d'un mandrin sécable (400) se positionnant à l'intérieur de ladite douille,
l'ensemble venant se positionner et traverser deux orifices (110 et 210) rendus sensiblement coaxiaux et ménagés dans les éléments (100 et 200) à assembler,
la douille (300) comportant un corps à deux extrémités,
une première extrémité (310) comportant une tête préformée pour définir une première surface d'appui (311) sur la surface extérieure (120) d'un premier élément (100), et une deuxième extrémité (320) qui, sous l'action d'une déformation par traction (flèche F) sur le mandrin (400) vient former un bulbe définissant une deuxième surface d'appui (321) sur la surface extérieure (220) dudit deuxième élément (200),
la prolongation de l'effort (flèche F) ayant pour effet le rapprochement des deux surfaces d'appuis (311 et 321) et en conséquence le rapprochement des deux éléments (100 et 200) à assembler et le sertissage de la première extrémité de la douille sur la deuxième extrémité du mandrin,
le rivet comportant une douille (300) qui, composée d'une seule et même pièce, est préformée d'une seule partie amincie (330) se situant entre les deux surfaces d'appui (311 et 321), cette partie amincie ayant pour fonction de ne pas contrecarrer les efforts de traction, faciliter la déformation de la douille et autoriser la mise en place d'une tension installée
**CARACTÉRISÉ EN CE QU'**il consiste à reprendre l'effort de traction (flèche F') qui va assurer une rupture de la douille (300) au niveau de son bulbe pour permettre l'évacuation, par les orifices de fixation (110 et 210), du mandrin (400) et d'une première partie de la douille (300') et la chute de la partie de bulbe (300") restée en extérieur.

2. Rivet (R) permettant de mettre en oeuvre le procédé d'enlèvement selon la revendication 1, **CARACTÉRISÉ PAR LE FAIT QUE** ledit mandrin (400) est préformé d'un gorge de rupture dimensionnée pour se casser et située suffisamment loin de la tête de douille (310) pour autoriser la reprise du mandrin (400) à des fins de dépose du rivet.

3. Rivet (R) selon la revendication 2, **CARACTÉRISÉ PAR** LE FAIT QUEla partie amincie (330) est constituée par une portion de douille (300) présentant un diamètre extérieur inférieur au diamètre extérieur du reste de la douille (300).

4. Rivet (R) selon la revendication 2, **CARACTÉRISÉ PAR LE FAIT QUE** la partie amincie (330) est constituée par une portion de douille (300) présentant un diamètre intérieur supérieur au diamètre intérieur du reste de la douille (300).

5. Rivet (R) selon la revendication 2, **CARACTÉRISÉ PAR LE FAIT QUE** la longueur (1) de la partie amincie (330) est inférieure à la plus petite distance (L) séparant les surfaces extérieures (120 et 220) des éléments (100 et 200) à fixer/accoster.

6. Rivet (R) selon la revendication 2, **CARACTÉRISÉ PAR LE FAIT QUE** la partie amincie (330) est séparée de la surface d'appui (311) définie par la tête de la douille (300) d'une portion présentant une épaisseur plus importante.

7. Rivet (R) selon la revendication 2, **CARACTÉRISÉ PAR LE FAIT QUE** la tête de la douille (300) présente la forme générale d'un cylindre creux traversé par le mandrin (400) présentant un renflement radial au niveau de son extrémité supérieure ainsi qu'au niveau de la surface définissant l'appui (311) avec l'élément (100) à assembler.

8. Rivet (R) selon la revendication 2, **CARACTÉRISÉ PAR LE FAIT QUE** ledit mandrin (400) est préformé d'une pluralité de cannelures auxquelles l'outil de pose ou de dépose vient s'associer.

## Claims

1. Method of removing a blind rivet (R) of the type intended for the coupling and the tack riveting together of at least two elements (100 and 200), said rivet being positioned by a setting tool,
the rivet (R) being an assembly comprising a deformable hollow sleeve (300) and a breakable mandrel (400) positioned within said sleeve,
the assembly being positioned and traversing two substantially coaxial openings (110 and 120) arranged in the elements (100 and 200) to be assembled,
the sleeve (300) comprising a body having two ends,
a first end (310) comprising a preformed head for defining a first support surface (311) on the external surface (120) of a first element (100), and a second end (320) which, under the action of a tension deformation (arrow F) on the mandrel (400), forms a bulb that defines a second support surface (321) on the external surface (220) of said second element (200),
the prolongation of the effort (arrow F) causing the two support surfaces (311 and 321) to be drawn nearer each other and consequently also drawing nearer together the two elements (100 and 200) to be assembled, and causing the crimping of the first end of the sleeve on the second end of the mandrel,
the rivet comprising a sleeve (300) which, integrally formed of one and the same piece, is preformed from a single tapered portion (330) positioned between the two support surfaces (311 and 321), said tapered portion not interfering with the tension efforts, while facilitating the deformation of the sleeve and permitting the establishment of an installed tension
**characterised in that** it consists of resuming the tensile force (arrow F') which ensures a rupture of the sleeve (300) at the level of its bulb so as to permit removal, by way of the fastening openings (110 and 120), of the mandrel (400) and of a first portion of the sleeve (300') as well as the falling away of the portion of the bulb (300'') remaining on the exterior.

2. Rivet (R) used to implement the method of removing according to claim 1, **characterised in that** said mandrel (400) is preformed from a breakneck groove dimensioned for breaking and positioned at a sufficient distance from the head of the sleeve (310) in order to permit the recovery of the mandrel (400) on the basis of the removal of the rivet.

3. Rivet (R) according to claim 2, **characterised in that** the tapered portion (330) consists of a portion of the sleeve (300) having an exterior diameter less than the exterior diameter of the remainder of the sleeve (300).

4. Rivet (R) according to claim 2, **characterised in that** the tapered portion (330) consists of a portion of the sleeve (300) having an interior diameter greater than the interior diameter of the remainder of the sleeve (300).

5. Rivet (R) according to claim 2, **characterised in that** the length (1) of the tapered portion (330) is less than the smallest span (L) separating the external surfaces (120 and 220) of the elements (100 and 200) to be fastened/coupled.

6. Rivet (R) according to claim 2, **characterised in that** the tapered portion (330) is separated from the support surface (311) defined by the head of the sleeve (300) by a portion having a greater thickness.

7. Rivet (R) according to claim 2, **characterised in that** the head of the sleeve (300) is generally shaped like a hollow cylinder, traversed by the mandrel (400), having a radial bulge at the level of its upper end as well as at the level of the surface defining the leaning (311) with the element (100) to be assembled.

8. Rivet (R) according to claim 2, **characterised in that** said mandrel (400) is preformed from a plurality of grooves with which the setting tool or removing tool engages.

## Patentansprüche

1. Verfahren zur Entfernung einer Blindniete (R) des Typs desjenigen, das für die Kopplung und das Anheften von mindestens zwei Elementen (100 und 200) untereinander und Durchführung durch ein Einbauwerkzeug vorgesehen ist.
wobei die Niete (R) eine Einheit ist, gebildet aus einer hohlen, verformbaren Hülse (300) und einem trennbaren Dorn (400), der sich im Inneren der Hülse positioniert,
wobei sich die Einheit positioniert und zwei Öffnungen (110 und 210) durchquert, die im Wesentlichen koaxial ausgerichtet und in den zu verbindenden Elementen (100 und 200) angebracht wurden.
wobei die Hülse (300) einen Körper mit zwei Enden umfasst,
ein erstes Ende (310), umfassend einen vorgeformten Kopf, um eine erst Auflagefläche (311) auf der Außenfläche (120) eines ersten Elements (100) zu definierten, und ein zweites Ende (320), das, unter der Einwirkung einer Verformung durch Ziehen (Pfeil F) am Dorn (400) einen Wulst bildet, der eine zweite Auflagefläche (321) auf der Außenfläche (220) des zweiten Elements (200) definiert,
wobei die Verlängerung der Kraft (Pfeil F) die Annäherung der zwei Auflageflächen (311 und 321) zur Folge hat und infolgedessen die Annäherung der zwei zu verbindenden Elemente (100 und 200) und das Crimpen des ersten Endes der Hülse auf dem zweiten Ende des Dorns,
wobei die Niete eine Hülse (300) umfasst, die, zusammengesetzt aus einem einzigen und gleichen Stück, mit einem einzigen verengten Teil (330) vorgeformt ist,
der sich zwischen den zwei Auflageflächen (311 und 321) befindet, wobei der verengte Teil die Aufgabe hat, den Zugkräften nicht entgegenzuwirken, die Verformung der Hülse zu ermöglichen und die Durchführung einer eingebauten Spannung zu erlauben.
**dadurch gekennzeichnet, dass** es darin besteht, die zugkraft (Pfeil F'), die einen Bruch der Hülse (300) auf der Ebene ihres Wulstes sicherstellt, wieder aufzunehmen, um die Entfernung, durch die Befestigungsöffnungen (110 und 210) des Dorns (400) und eines ersten Teils der Hülse (300') und den Fall des Teils des Wulstes (300"), der außen geblieben ist, zu ermöglichen.

2. Niete (R), die es ermöglicht, das Verfahren zur Entfernung nach Anspruch 1 durchzuführen, **dadurch gekennzeichnet, dass** der Dorn (400) mit einer Bruchstelle vorgeformt ist, die dimensioniert ist, um zu brechen und ausreichend weit vom Hülsenkopf (310) entfernt ist, um die Wiederaufnahme des Dorns (400) zur Aufbringung der Niete zu erlauben.

3. Niete (R) nach Anspruch 2, **dadurch gekennzeichnet, dass** der verengte Teil (330) aus einem Hülsenabschnitt (300) gebildet ist, der einen Außendurchmesser aufweist, der geringer als der Außendurchmesser der restlichen Hülse (300) ist.

4. Niete (R) nach Anspruch 2, **dadurch gekennzeichnet, dass** der verengte Teil (330) aus einem Hülsenabschnitt (300) gebildet ist, der einen Innendurchmesser aufweist, der größer als der Innendurchmesser der restlichen Hülse (300) ist.

5. Niete (R) nach Anspruch 2, **dadurch gekennzeichnet, dass** die Länge (1) des verengten Teils (330) geringer als der kleinste Abstand (L) ist, der die Außenflächen (120 und 220) der zu befestigenden/verbindenden Elemente (100 und 200) trennt.

6. Niete (R) nach Anspruch 2, **dadurch gekennzeichnet, dass** der verengte Teil (330) von der Auflagefläche (311), definiert durch den Kopf der Hülse (300) eines Abschnitts, der eine größere Dicke aufweist, getrennt ist.

7. Niete (R) nach Anspruch 2, **dadurch gekennzeichnet, dass** der Kopf der Hülse (300) die allgemeine Form eines hohlen Zylinders aufeist, der vom Dorn (400) durchquert wird, aufweisend eine radiale Ausbauchung auf der Ebene seines oberen Endes, ebenso wie auf der Ebene der Fläche, die die Auflage (311) mit dem zu verbindenden Element (100) definiert.

8. Niete (R) nach Anspruch 2, **dadurch gekennzeichnet, dass** der Dorn (400) mit einer Vielzahl von Rillen vorgeformt ist, mit denen sich das Ein- oder Ausbauwerkzeug verbindet.
